# EUROPÄISCHE PATENTSCHRIFT

(11) **EP 0 330 818 B1**
(45) Veröffentlichungstag und Bekanntmachung des Hinweises auf die Patenterteilung: **07.09.1994**
(21) Anmeldenummer: 89100744.5
(22) Anmeldetag: 18.01.1989
(51) Int. Cl.: A01D 80/00, A01D 78/00

(54) **Heuwerbungsmaschine**
Hay making machine
Machine pour la fenaison

(30) Priorität: 27.02.1988 DE 3806240
(43) Veröffentlichungstag der Anmeldung: 06.09.1989
(73) Patentinhaber: FELLA-WERKE GMBH, D-90537 Feucht (DE)
(72) Erfinder: Pürrer, Josef, D-8501 Feucht (DE); Lindner, Helmut, D-8508 Wendelstein (DE); Kohl, Bernhard, D-8501 Winkelhaid (DE)
(74) Vertreter: Matschkur, Peter Dipl.-Phys.

(56) Entgegenhaltungen:
- DE-A- 1 482 007
- DE-B- 2 531 289
- DE-U- 6 926 659
- FR-A- 2 529 049

## Beschreibung

Die Erfindung richtet sich auf eine Heuwerbungsmaschine, deren Maschinenrahmen zum Befestigen an der Dreipunktaufhänge vorrichtung eines Schleppers eine Verbindungsstrebe aufweist, die an einem Dreipunktbock um nur eine vertikale Schwenkachse schwenkbar angelenkt, in Anhebestellung des Dreipunktbocks aber mittels einer Arretierungsvorrichtung im wesentlichen unschwenkbar arretiert ist, wobei die Arretierung unabhängig von der Hubbewegung des Dreipunktbocks ist.

Die Anhängung einer Heuwerbungsmaschine am zugehörigen Schlepper mittels einer in das Zugmaul des Schleppers eingreifenden Deichsel ist seit langem bekannt, heute aber mehr und mehr überholt, da sich der Dreipunktanbau immer mehr durchgesetzt hat. Da die Heuwerbungsmaschine im allgemeinen auch bei Kurvenfahrt oder einem Wendemanöver in der Regel in Arbeitsstellung verbleibt, in der die Stützräder auf dem Boden laufen, müssen entsprechende Vorkehrungen dafür getroffen werden, daß die Maschine auch in diesem Fall beweglich nachlaufen kann. Infolgedessen verbietet sich eine starre Verbindung zwischen Schlepper und Heuwerbungsmaschine, damit bei Kurvenfahrt des Schleppers die Stützräder der Maschine nicht auf dem Boden schleifen. Eine solche Anhängung der Maschine eignet sich jedoch nicht für den Straßentransport. In diesem Fall muß die Verbindung zwischen der Maschine und dem Schlepper starr sein, damit die durch den Dreipunktanbau ausgehobene Heuwerbungsmaschine nicht seitlich pendelt. Die Verbindung zwischen dem üblichen Dreipunktbock mit zwei unteren Lenkern und einem Oberlenker mit der Arbeitsmaschine wird durch eine Verbindungsstrebe hergestellt, die bei den bekannten Anordnungen gelenkig am Anbaubock angreift und sowohl eine Bewegung in vertikaler, als auch in horizontaler Richtung ermöglicht. Um in konstruktiver Hinsicht genügend Freiraum für die Antriebsgelenkwelle zu erreichen, liegen diese Gelenkpunkte sehr eng zusammen im oberen Teil des Dreipunktbockes. Beim Ausheben der Maschine erfolgt nach einem gewissen Hubweg eine Verriegelung zwischen Dreipunktbock und Verbindungsstrebe, so daß der Gelenkarm starr gestellt wird und ein Pendeln der Maschine gegenüber dem Dreipunktbock verhindert wird. Für diesen Verriegelungsvorgang geht allerdings ein wesentlicher Teil der Hubhöhe der Schlepperhydraulik verloren, wodurch sich die Bodenfreiheit der Maschine beim Straßentransport erheblich vermindert.

Aus der FR-A-2529049 ist darüber hinaus bereits eine Heuwerbungsmaschine der eingangs beschriebenen Art bekanntgeworden, bei der die Arretierungseinrichtung unabhängig von der Hubbewegung des Dreipunktbocks ist. Bei den bekannten derartigen Heuwerbungsmaschinen ergab sich jedoch der Nachteil, daß dann, wenn man einen Leerhub beim Anheben des Dreipunktbocks vermeiden wollte, man in die Arretierungsstrebe zwischen Dreipunktbock und Verbindungsstrebe eingebaute Federn verwenden mußte, die zur Arretierung in der Mittellage sehr straff sein mußten, so daß sie die Auslenkung bei Kurvenfahrten sehr stark behinderten.

Aufgabe der Erfindung ist deshalb, bei einer Heuwerbungsmaschine der eingangs bezeichneten Art die Arretierung so auszubilden, daß sie völlig unabhängig von der für das Ziehen des Geräts notwendigen Verbindungseinrichtung zwischen Dreipunktbock und Maschinenrahmen der Heuwerbungsmaschine betätigt werden kann. Es soll weder die Beweglichkeit zwischen Schlepper und Maschine beim Kurvenfahren behindert werden, noch soll sich die Aushubbewegung der Dreipunkthydraulik des Schleppers nachteilig auf die Aushubhöhe der Maschine auswirken.

Zur Lösung dieser Aufgabe wird erfindungsgemäß vorgeschlagen, daß die Betätigung der Arretierungseinrichtung abhängig von Schwenkbewegungen von Rahmenteilen ist.

Alternativ kann dabei auch vorgesehen sein, daß die Betätigung der Arretierungsvorrichtung abhängig von Schwenkbewegungen sowohl von Rahmenteilen als auch von anderen Stellgliedern ist.

Dieser Grundgedanke der Erfindung läßt sich auf verschiedene Weise realisieren. Zum einen ist es möglich, die Anordnung so zu treffen, daß die Arretierungseinrichtung einerseits am Dreipunktbock und andererseits an der Verbindungsstrebe angreift. Dieser ist bei derartigen Maschinen starr mit der Verbindungsstrebe verbunden, so daß es keine Schwierigkeiten bereitet, den Maschinenrahmen zum Arretieren der Anhängeverbindung zwischen Maschine und Schlepper heranzuziehen. Welcher Ausführungsform der Vorzug gegeben wird, richtet sich ganz nach den Umständen des Einzelfalls, in Sonderheit nach den konstruktiven Gegebenheiten insbes. der anzuhängenden Heuwerbungsmaschine.

In weiterer Ausgestaltung dieses allgemeinen Prinzips ist an beiden Seiten der Verbindungsstrebe je ein Stellglied angeordnet, die beide gemeinsam aus einer Stellung mit Spiel gegenüber der Schwenkbewegung der Verbindungsstrebe in eine Arretierstellung für die Verbindungsstrebe verstellbar sind. In der Arbeitsstellung soll die Anhängung der Maschine genügendes Spiel für die Schwenkbewegung der Anhängung gestatten, wobei es durchaus möglich ist, die Arretierungseinrichtung als Dämpfungsglied für die Schwenkbewegung zu nutzen, falls dies - aus welchen Gründen immer - gewünscht ist. Wird das Bewegungsspiel dieser Stellglieder jedoch aufgehoben, erfolgt eine Arretierung der Verbindungsstrebe gegenüber dem Dreipunktbock des Schleppers, so daß eine mögliche Pendelbewegung der Maschine gegenüber dem Schlepper ausgeschlossen ist und beim Straßentransport keine Gefährdung der Maschine selbst oder anderer Verkehrsteilnehmer möglich ist.

Es liegt im Rahmen der Erfindung, daß die Stellglieder aus zwei druckmittelbetriebenen Stellmotoren bestehen. Diese können ohne weiteres in die Schlepperhydraulik einbezogene Hydraulikmotoren sein. Eine zusätzliche Energiequelle ist hierbei angesichts der ohnehin vorhandenen Schlepperhydraulik entbehrlich. Eine nicht minder wirkungsvolle Arretierung kann auch aus zwei Seilzügen als Stellglieder gebildet werden. Diese erhalten beim normalen Arbeitsbetrieb der angehängten Maschine genügend Hängseil, um der Arbeitsmaschine das notwendige Bewegungsspiel zu erlauben. Werden die Seilzüge aber angezogen, erfolgt eine weitgehend starre Arretierung der Verbindungsstrebe gegenüber dem Dreipunktbock. Auch hier erlaubt die konstruktive Verwirklichung dieses Gedankens verschiedene Wege. In einem Fall sind die Seilzüge mit ihrem einen Ende an der Kolbenstange eines druckmittelbetriebenen Stellmotors befestigt, der seinerseits an der Verbindungsstrebe angeordnet ist. Ggf. können die beiden Seilzüge miteinander kombiniert und über eine am Ende der Kolbenstange angeordnete Rolle geführt sein. Bei ausgefahrenem Kolben des Stellmotors erhalten die Seilzüge ein ausreichendes Hängseil, um der Verbindungsstrebe die notwendige Bewegungsfreiheit zu erlauben. Wird der Kolben hingegen eingefahren, werden die Seilzüge gespannt, und die Verbindungsstrebe wird fest gegenüber dem Dreipunktbock arretiert, so daß das Bewegungsspiel aufgehoben wird.

Da derartige Heuwerbungsmaschinen im allgemeinen eine beachtliche Arbeitsbreite aufweisen und zum Zwecke des Straßentransportes die seitlich äußeren Rahmenteile gegenüber dem mittleren Rahmenteil eingeklappt oder hochgeklappt werden, ist es besonders vorteilhaft, wenn diese Bewegung zum Arretieren der Anhängeverbindung zwischen Arbeitsmaschine und Schlepper nutzbar gemacht wird. Hierzu sieht die Erfindung vor, daß die Seilzüge mit ihrem einen Ende je an einem gegenüber dem mit der Verbindungsstrebe starr verbundenen Maschinenrahmenteil einklappbaren seitlich-äußeren Rahmenteil befestigt sind und deren Schwenkbewegung in Transportstellung zum Spannen der Seilzüge dient. Die einzelnen Seilzüge können hierbei eine Rollenführung aufweisen, um den konstruktiven Gegebenheiten hinreichend Rechnung zu tragen. Werden die äußeren Rahmenteile nach beendeter Arbeit hochgeklappt, werden zugleich die Seilzüge gespannt, was die Arretierung der Verbindungsstrebe gegenüber der Dreipunktanlenkung spannt und zur Arretierung der Verbindungsstrebe gegenüber dem Dreipunktbock führt. Ggf. kann in diese Seilzüge eine Zugfeder von entsprechender Spannkraft eingeschaltet werden, um ein erforderliches Spiel der Arretierungseinrichtung zu gewährleisten.

Bedient sich die Arretierungseinrichtung allerdings zweier im allgemeinen hydraulischer Stellmotore, so sind diese vorzugsweise so angeordnet, daß sie mit ihrem einen Ende an einem gemeinsamen Punkt der Verbindungsstrebe angreifen.

Schließlich sieht eine weitere Alternative der Erfindung vor, daß zwischen der Verbindungsstrebe und dem Dreipunktbock eine aus einer unwirksamen Stellung außerhalb des Schwenkbereichs der Verbindungsstrebe in eine Arretierstellung im Schwenkbereich verstellbare Rastfläche angeordnet ist, die in Arretierstellung mit einer Raste am anderen verschwenkbaren Teil zusammenwirkt. Im allgemeinen wird die Rastfläche an dem Dreipunktbock angeordnet sein, während die Raste selbst an der Verbindungsstrebe sitzt. Es ist aber durchaus möglich, auch die umgekehrte Anordnung zu wählen. Zweckmäßig dient zum Verstellen der Rastfläche wiederum ein Hydraulikzylinder.

Weitere Merkmale, Einzelheiten und Vorteile der Erfindung ergeben sich aus der folgenden Beschreibung einiger bevorzugter Ausführungsformen der Erfindung sowie anhand der Zeichnung. Hierbei zeigen:

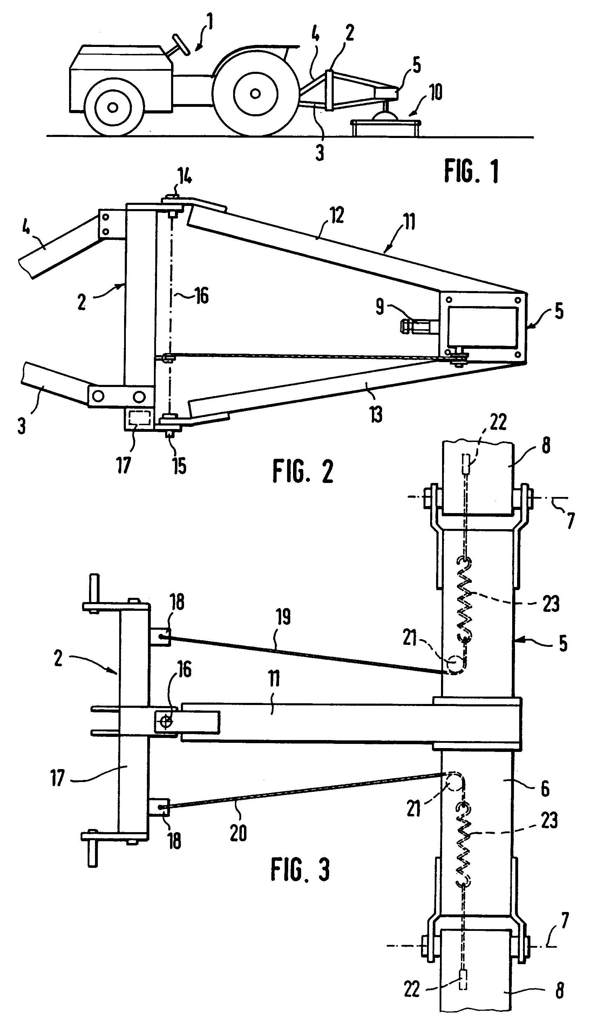

Fig. 1 die schematische Darstellung der Anhängung einer Arbeitsmaschine am Schlepper;
Fig. 2 eine erste Ausführungsform in Seitenansicht und
Fig. 3 in Draufsicht unter vereinfachter Form der Darstellung;
Fig. 4 eine weitere Ausführungsform in Seitenansicht und
Fig. 5 in Draufsicht;
Fig. 6 eine andere Abwandlung der Erfindung in Seitenansicht und
Fig. 7 in Draufsicht;
Fig. 8 eine weitere Variante in Seitenansicht und
Fig. 9 in Draufsicht;
Fig. 10 ein Detail dieser Ausführungsform in vergrößerter Darstellung;
Fig. 11 eine weitere Abwandlung in Seitenansicht und
Fig. 12 in Draufsicht.

An der Rückseite des Schleppers 1 ist die übliche Dreipunktanhängung vorgesehen, deren Dreipunktbock 2 an zwei unteren Lenkern 3 und einem Oberlenker 4 aufgehängt und mit der Schlepperhydraulik verbunden ist. Der Dreipunktbock 2 dient zur Anlenkung der Arbeitsmaschine, von der lediglich der Rahmen 5 dargestellt ist, der beispielsweise aus einem Rahmenmittelteil 6 und seitlich außen angelenkten und um die Achse 7 hochklappbaren äußeren Rahmenteilen 8 bestehen kann. Der Gelenkwellenkopf 9 dient zum Anschluß der zum Schlepper 1 führenden Gelenkwelle, die nicht im einzelnen wiedergegeben ist.

Zur Anhängung weist die Maschine 10 eine mit dem Rahmen 5 fest verbundene Verbindungsstrebe 11 auf, die bei der in der Zeichnung wiedergegebenen Ausführungsform aus einem oberen Arm 12 und einem unteren Arm 13 besteht. Beide liegen in einer gemeinsamen vertikalen Ebene und sind über die Zapfen 14 und 15 am Dreipunktbock 2 angelenkt. Die vertikale Schwenkachse dieser Verbindungsstrebe 11 ist mit 16 bezeichnet. An den mit der Querstrebe 17 des Dreipunktbockes 2 verbundenen Lappen 18 ist das eine Ende von zwei Seilzügen 19, 20 angeschlagen. Diese verlaufen symmetrisch zu beiden Seiten der Verbindungsstrebe 11, dann über am mittleren Rahmenteil 6 angeordnete Rollen 21 bis zu den Lagern 22 an den beiden äußeren Rahmenteilen 8, an die das andere Ende der Seilzüge 19, 20 angeschlagen ist. In jeden Seilzug 19, 20 ist eine Zugfeder 23 eingeschaltet. In der Arbeitsstellung der Maschine 10 fluchten die Rahmenteile 6 und 8 im wesentlichen. In dieser Stellung sind die Seilzüge 19, 20 entspannt, so daß die Verbindungsstrebe die notwendige Bewegungsfreiheit um ihre Drehachse 16 gegenüber dem Dreipunktbock 2 aufweist. Die Maschine 10 kann dann auch bei Kurvenfahrt den Schlepperbewegungen ohne weiteres folgen. Werden die äußeren Rahmenteile 8, beispielsweise zum Zwecke des Straßentransports, um ihre Drehachse 7 gegenüber dem mittleren Rahmenteil 6 hochgeschwenkt, wirkt eine Zugkraft auf die Seilzüge 19, 20. Diese werden gespannt und arretieren damit die Verbindungsstrebe 11 der Anhängung gegenüber dem Dreipunktbock 2 soweit, daß die Maschine 10 nicht mehr um die vertikale Schwenkachse 16 pendeln kann.

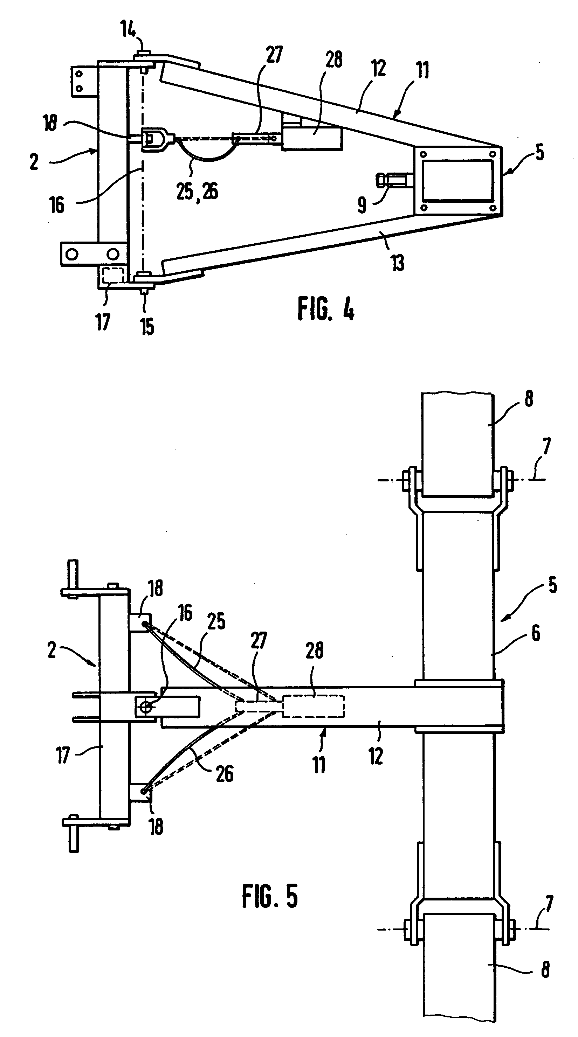

Auch die Ausführungsform nach den Fig. 4 und 5 bedient sich zweier Seilzüge 25, 26. Deren eines Ende ist wieder an den Lappen 18 der Querstrebe 17 des Dreipunktbockes 2 befestigt, während ihr anderes Ende an der in ausgefahrener Stellung wiedergegebenen Kolbenstange 27 eines hydraulischen Stellmotors 28 angreift. Die beiden Seilzüge 25, 26 können aber auch, was, da an sich verständlich, im einzelnen nicht wiedergegeben wird, zu einem Seil vereinigt und über eine am äußeren Ende der Kolbenstange 27 angeordnete Rolle geführt sein. Bei ausgefahrener Kolbenstange 27 haben die Seilzüge 25, 26 genügend Hängseil und gewähren damit der Verbindungsstrebe 11 die notwendige Bewegungsfreiheit bzw. Schwenkbewegung um die Schwenkachse 16. Wird die Kolbenstange 27 hingegen eingefahren, werden die Seilzüge 25, 26 gespannt, wie in gestrichelten Linien in den Fig. 4 und 5 angedeutet ist. Der hydraulische Stellmotor 28 kann in die Hydraulik des Schleppers 1 einbezogen sein. Er kann getrennt betätigt werden, andererseits aber auch in Verbindung mit dem das Hochschwenken der äußeren Rahmenteile 8 bewirkenden Hydraulikmotor.

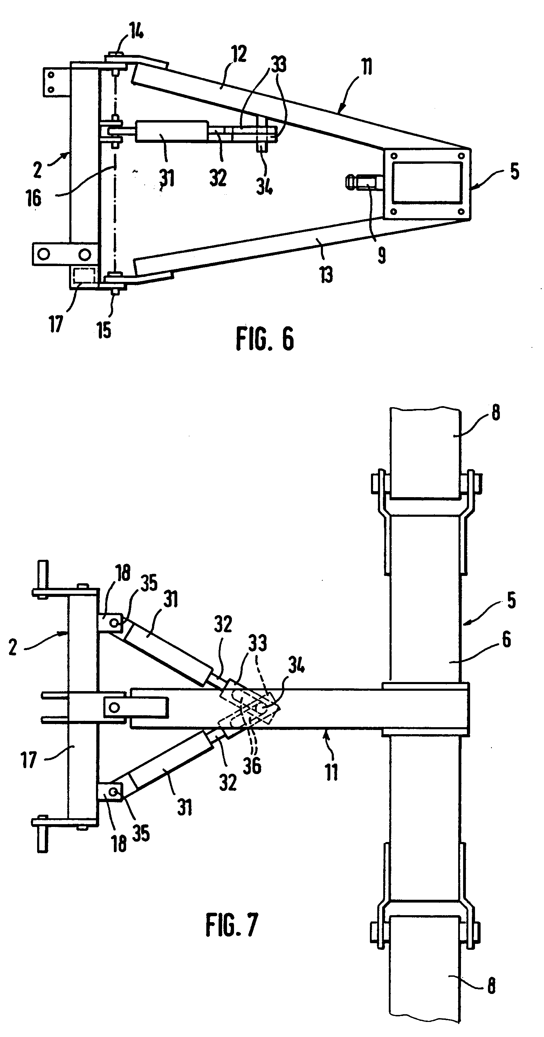

Die Fig. 6 und 7 zeigen eine weitere abgewandelte Ausführungsform. Hier sind in symmetrischer Anordnung beiderseits der Verbindungsstrebe 11 zwei Stellmotore 31 angeordnet, deren Kolbenstange 32 über eine Langlochlasche 33 an dem Zapfen 34 angreifen, welcher an der Unterseite der oberen Strebe 12 der Verbindungsstrebe 11 angreift. Das andere Ende der hydraulischen Stellmotore 31 ist bei 35 an dem Lappen 18 des Dreipunktbockes 2 befestigt. Die Verbindungsstrebe 11 für die Maschine 10 erhält durch die Langlöcher 36 die notwendige Bewegungsfreiheit. Es kann aber auch ohne weiteres so gefahren werden, daß die Stellmotore 31 drucklos gesetzt werden. Wird die Kolbenstange 32 hingegen eingefahren, erfolgt eine feste Verbindung zwischen den Anlenkpunkten 35 der Stellmotore 31 am Dreipunktbock 2 und dem Zapfen 34 an der Verbindungsstrebe 11 zu der Maschine 10, so daß diese gegenüber dem Dreipunktbock 2 fest arretiert wird. Eine Pendelbewegung der ausgehobenen Maschine ist dann praktisch ausgeschlossen.

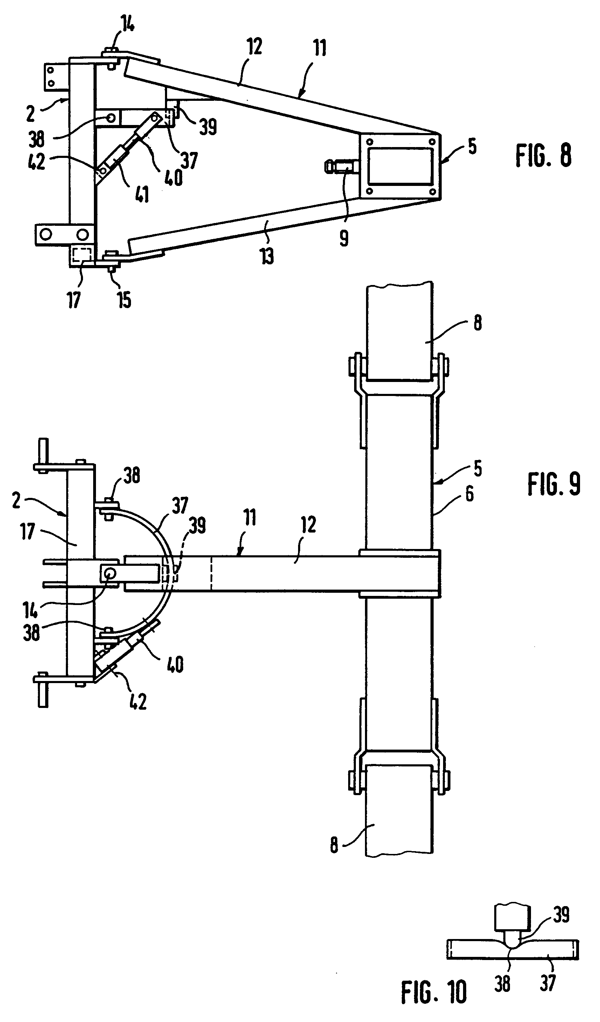

Die Fig. 8 bis 10 zeigen eine weitere Ausführungsform der Erfindung, und zwar findet dort eine mechanische Arretierung der Verbindungsstrebe 11 statt. An dem Dreipunktbock 2 ist eine bogenförmige Rastfläche 37 um die Zapfen 38 in einer vertikalen Ebene schwenkbar angebracht. In ihrer Mitte weist sie eine Raste 38 auf, die in der Stellung nach Fig. 10 mit einem Nocken 39 zusammenwirkt, der an der Unterseite des Arms 12 der Verbindungsstrebe 11 angebracht ist. An der Rastfläche 37 greift die Kolbenstange 40 eines Stellmotors 41 an, dessen anderes Ende bei 42 an dem Dreipunktbock 2 schwenkbar gelagert ist. Wird der Stellmotor 1 beaufschlagt und die Kolbenstange 40 ausgefahren, wird die Rastfläche 37 hochgeschwenkt, so daß der Nocken 39 der Verbindungsstrebe 13 bei entsprechender Schwenkbewegung gegenüber dem Dreipunktbock 2 in die Raste 38 einfällt. Damit ist die Verbindungsstrebe 11 entsprechend arretiert. Bei eingefahrener Kolbenstange 40 hingegen liegt die Rastfläche 37 außerhalb des Bewegungsbereichs des Nockens 39, so daß die Verbindungsstrebe 11 ungehindert gegenüber dem Dreipunktbock 2 des Schleppers 1 schwenkbar ist.

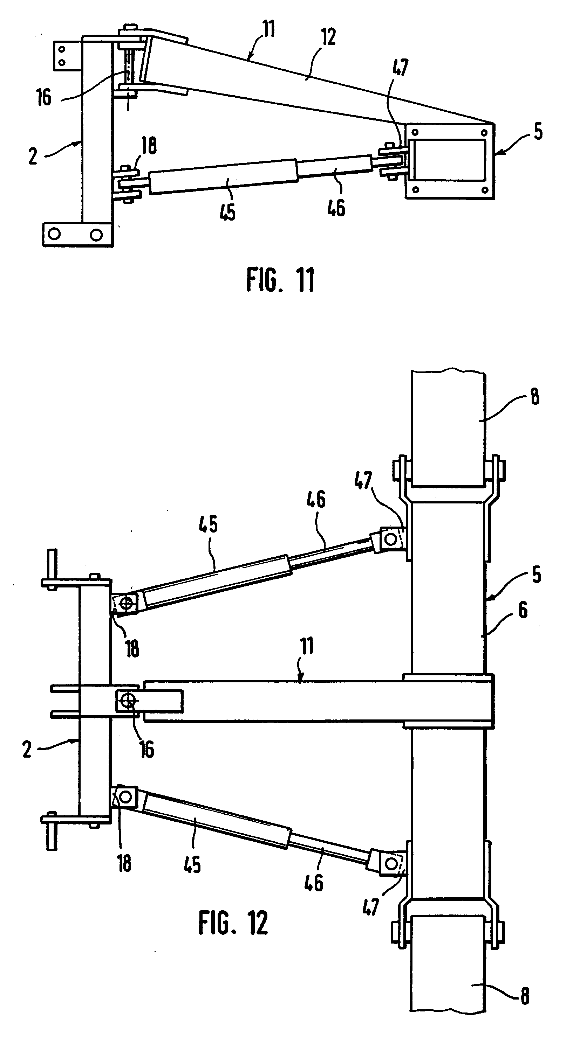

Die Fig. 11 und 12 geben eine weitere Ausführungsform wieder, bei der wiederum symmetrisch zu beiden Seiten der Verbindungsstrebe 11 je ein hydraulischer Stellmotor 45 angeordnet ist, der mit seinem einen Ende an dem Lappen 18 des Dreipunktbockes 2 und mit seinem anderen Ende, hier mit dem freien Ende seiner Kolbenstange 46, an einem Lager 47 des mittleren Rahmenteils 6 des Maschinenrahmens 5 angreift. Auch in diesem Falle vermag die Verbindungsstrebe 11 dann um ihre Drehachse 16 zu schwenken, wenn die beiden Hydraulikmotore 45 drucklos gehalten werden. Bei Beaufschlagung mit dem Druckmittel wird jedoch zwischen dem Dreipunktbock 2 und dem Maschinenrahmen 5 eine starre Verbindung hergestellt, die ein Verschwenken der Verbindungsstrebe 11 um ihre Achse 16 unmöglich macht.

## Patentansprüche

1. Heuwerbungsmaschine, deren Maschinenrahmen (5) zum Befestigen an der Dreipunktaufhängevorrichtung (3, 4) eines Schleppers eine Verbindungsstrebe (11) aufweist, die an einem Dreipunktbock (2) um nur eine vertikale Schwenkachse (16) schwenkbar angelenkt, in Anhebestellung des Dreipunktbocks (2) aber mittels einer Arretierungsvorrichtung im wesentlichen unschwenkbar arretiert ist, wobei die Arretierung unabhängig von der Hubbewegung des Dreipunktbocks ist, dadurch gekennzeichnet, daß die Betätigung der Arretierungsvorrichtung abhängig von Schwenkbewegungen von Rahmenteilen (8) ist.

2. Heuwerbungsmaschine, deren Maschinenrahmen (5) zum Befestigen an der Dreipunktaufhängevorrichtung (3, 4) eines Schleppers eine Verbindungsstrebe (11) aufweist, die an einem Dreipunktbock (2) um nur eine vertikale Schwenkachse (16) schwenkbar angelenkt, in Anhebestellung des Dreipunktbocks (2) aber mittels einer Arretierungsvorrichtung im wesentlichen unschwenkbar arretiert ist, wobei die Arretierung unabhängig von der Hubbewegung des Dreipunktbocks ist, dadurch gekennzeichnet, daß die Betätigung der Arretierungsvorrichtung abhängig von Schwenkbewegungen sowohl von Rahmenteilen (8) als auch von anderen Stellgliedern (19, 20, 25, 26, 28, 31, 45) ist.

3. Heuwerbungsmaschine nach Anspruch 1 oder 2, dadurch gekennzeichnet, daß die Arretierungsvorrichtung einerseits am Dreipunktbock (2) und andererseits an der Verbindungsstrebe (11) angreift.

4. Heuwerbungsmaschine nach Anspruch 1 oder 2, dadurch gekennzeichnet, daß die Arretierungsvorrichtung einerseits am Dreipunktbock (2) und andererseits an dem Maschinenrahmen (5) angreift.

5. Heuwerbungsmaschine nach mindestens einem der Ansprüche 1 bis 4, dadurch gekennzeichnet, daß an beiden Seiten der Verbindungsstrebe (11) je ein Stellglied angeordnet ist, die beide gemeinsam aus einer Stellung mit Spiel gegenüber der Schwenkbewegung der Verbindungsstrebe (11) in eine Arretierstellung verstellbar sind.

6. Heuwerbungsmaschine nach mindestens einem der Ansprüche 1 bis 5, dadurch gekennzeichnet, daß die Stellglieder aus zwei druckmittelbetriebenen Stellmotoren (31, 45) bestehen.

7. Heuwerbungsmaschine nach mindestens einem der Ansprüche 1 bis 5, dadurch gekennzeichnet, daß die Stellglieder aus zwei Seilzügen (19, 20; 25, 26) bestehen.

8. Heuwerbungsmaschine nach Anspruch 7, dadurch gekennzeichnet, daß die Seilzüge (25, 26) mit ihrem einen Ende an der Kolbenstange (27) eines druckmittelbetriebenen Stellmotors (28) befestigt sind, der an der Verbindungsstrebe (11) angeordnet ist.

9. Heuwerbungsmaschine nach Anspruch 7, dadurch gekennzeichnet, daß die Seilzüge (19, 20) mit ihrem einen Ende je an einem gegenüber dem mit der Verbindungsstrebe (11) starr verbundenen Maschinenrahmenteil (6) einklappbaren seitlich-äußeren Rahmenteil (8) befestigt sind und deren Schwenkbewegung in Transportstellung zum Spannen der Seilzüge (19, 20) dient.

10. Heuwerbungsmaschine nach Anspruch 6, dadurch gekennzeichnet, daß die beiden Stellmotoren (31) gemeinsam mit ihrem einen Ende an einem Punkt (34) der Verbindungsstrebe (11) angreifen.

11. Heuwerbungsmaschine nach einem der Ansprüche 1 bis 3, dadurch gekennzeichnet, daß zwischen der Verbindungsstrebe (11) und dem Dreipunktbock (2) eine aus einer unwirksamen Stellung außerhalb des Schwenkbereichs der Verbindungsstrebe (11) in eine Arretierstellung im Schwenkbereich verstellbare Rastfläche (37) angeordnet ist, die in Arretierstellung mit einer Raste (39) am anderen verschwenkbaren Teil zusammenwirkt.

12. Heuwerbungsmaschine nach einem der Ansprüche 2-6, 8, 10, 11 dadurch gekennzeichnet, daß die Stellglieder bzw. der Stellmotor in den vorhandenen Druckmittelkreislauf zur Betätigung von beweglichen Teilen der Maschine eingegliedert sind.

## Claims

1. Hay-making machine, whose machine frame (5) has a connecting strut (11) for fixing to the three-point coupler (3, 4) of a tractor, said strut being pivotably coupled to a three-point bracket (2) about only one vertical pivotal axis (16), but being substantially non-pivotably locked in the lifting position of the three-point bracket (2) by means of a locking device, such locking being independent of the lifting motion of the three-point bracket, characterised in that actuation of the locking device is independent of pivotal motions of frame parts (8).

2. Hay-making machine, whose machine frame (5) has a connecting strut (11) for fixing to the three-point coupler (3, 4) of a tractor, said strut being pivotably coupled to a three-point bracket (2) about only one vertical pivotal axis (16), but being substantially non-pivotably locked in the lifting position of the three-point bracket (2) by means of a locking device, such locking being independent of the lifting motion of the three-point bracket, characterised in that actuation of the locking device is dependent on pivotal motions both of frame parts (8) and of other actuating members [illegible numbers].

3. Hay-making machine according to claim 1 or 2, characterised in that the locking device acts on the three-point bracket (2) on one side and on the connecting strut (11) on the other side.

4. Hay-making machine according to claim 1 or 2, characterised in that the locking device acts on the three-point bracket (2) on one side and on the machine frame (5) on the other side.

5. Hay-making machine according to at least one of claims 1 to 4, characterised in that on each side of the connecting strut (11) a respective actuating member is provided, these being adjustable together from a position with clearance from the pivotal motion of the connecting strut (11) into a locking position.

6. Hay-making machine according to at least one of claims 1 to 5, characterised in that the actuating members consist of two pressure-medium actuated servomotors (31, 45).

7. Hay-making machine according to at least one of claims 1 to 5, characterised in that the actuating members consist of two Bowden controls (19, 20; 25, 26).

8. Hay-making machine according-to claim 7, characterised in that the Bowden controls (25, 26) are fixed at one end to the piston rod (27) of a pressure-medium-actuated servomotor (28) mounted on the connecting strut (11).

9. Hay-making machine according to claim 7, characterised in that the Bowden controls (19, 20) are connected at one end to a respective laterally outer frame part (8) which can in each case be folded in relative to the machine frame part (6) rigidly connected to the connecting strut (11), the pivotal motion of these frame parts (8) being applied in the transport position to tighten the Bowden controls (19, 20).

10. Hay-making machine according to claim 6, characterised in that the two servomotors (31) together act at their one end on a point (34) on the connecting strut (11).

11. Hay-making machine according to one of claims 1 to 3, characterised in that between the connecting strut (11) and the three-point bracket (2), a locating face (17) adjustable from an inactive position outside the pivotal range of the connecting strut (11) into a locking position within that pivotal range is provided, which in the locked position cooperates with a catch (39) on the other pivotable part.

12. Hay-making machine according to one of claims 2-6, 8, 10 and 11, characterised in that the actuating members or servomotor are incorporated in the pressure medium circuit for actuating the moving parts of the machine.

## Revendications

1. Machine de fenaison, dont le châssis de machine (5), pour sa fixation au dispositif d'attelage trois points (3, 4) d'un tracteur, comporte un bras de liaison (11), qui est articulé autour d'un unique axe de pivotement (16) vertical, sur un chevalet trois points (2), mais qui, dans la position relevée du chevalet trois points (2), est bloqué de manière sensiblement non pivotante, au moyen d'un dispositif de blocage, le blocage étant indépendant du mouvement de levage du chevalet trois points, caractérisée en ce que l'actionnement du dispositif de blocage est fonction de mouvements de pivotement de parties de châssis (8).

2. Machine de fenaison, dont le châssis de machine (5), pour sa fixation au dispositif d'attelage trois points (3, 4) d'un tracteur, comporte un bras de liaison (11), qui est articulé autour d'un unique axe de pivotement (16) vertical, sur un chevalet trois points (2), mais qui, dans la position relevée du chevalet trois points (2), est bloqué de manière sensiblement non pivotante, au moyen d'un dispositif de blocage, le blocage étant indépendant du mouvement de levage du chevalet trois points, caractérisée en ce que l'actionnement du dispositif de blocage est fonction de mouvements de pivotement aussi bien de parties de châssis (8), que d'autres organes d'actionnement (19, 20, 25, 26, 28, 31, 45).

3. Machine de fenaison selon la revendication 1 ou 2, caractérisée en ce que le dispositif de blocage agit d'une part sur le chevalet trois points (2) et d'autre part sur le bras de liaison (11).

4. Machine de fenaison selon la revendication 1 ou 2, caractérisée en ce que le dispositif de blocage agit d'une part sur le chevalet trois points (2), et d'autre part sur le châssis de machine (5).

5. Machine de fenaison selon l'une au moins des revendications 1 à 4, caractérisée en ce que de part et d'autre du bras de liaison (11) est disposé à chaque fois un organe d'actionnement, ces deux organes d'actionnement pouvant être déplacés en commun, d'une position avec jeu par rapport au mouvement de pivotement du bras de liaison (11), à une position de blocage.

6. Machine de fenaison selon l'une au moins des revendications 1 à 5, caractérisée en ce que les organes d'actionnement sont constitués par deux vérins (31, 45) fonctionnant à l'aide d'un fluide de pression.

7. Machine de fenaison selon l'une au moins des revendications 1 à 5, caractérisée en ce que les organes d'actionnement sont constitués de deux tirants à câble (19, 20; 25, 26).

8. Machine de fenaison selon la revendication 7, caractérisée en ce que les tirants à câble (25, 26) sont fixés, par l'une de leurs extrémités, à la tige de piston (27) d'un vérin (28) qui fonctionne à l'aide d'un fluide de pression, et qui est disposé sur le bras de liaison (11).

9. Machine de fenaison selon la revendication 7, caractérisée en ce que les tirants à câble (19, 20) sont fixés, par l'une de leurs extrémités, chacun à une partie de châssis (8) latéralement extérieure, pouvant être rabattue par basculement par rapport à la partie de châssis (6) reliée de manière rigide au bras de liaison (11), le mouvement de pivotement en position de transport des parties de châssis (8) latéralement extérieures, servant à tendre les tirants à câble (19, 20).

10. Machine de fenaison selon la revendication 6, caractérisée en ce que les deux vérins (31) agissent en commun, avec l'une des leurs extrémités, en un point (34) du bras de liaison (11).

11. Machine de fenaison selon l'une des revendications 1 à 3, caractérisée en ce qu'entre le bras de liaison (11) et le chevalet trois points (2) est disposée une surface de verrouillage (37) susceptible d'être déplacée d'une position non active, en-dehors de la zone de pivotement du bras de liaison (11), vers une position de blocage dans la zone de pivotement, cette surface de verrouillage coopérant avec un cran d'arrêt (39) sur l'autre partie pivotante, dans la position de blocage.

12. Machine de fenaison selon l'une des revendications 2 à 6, 8, 10, 11, caractérisée en ce que les organes d'actionnement ou les vérins, sont intégrés dans le circuit de fluide de pression existant, destiné à l'actionnement de parties mobiles de la machine.
